# EUROPÄISCHE PATENTANMELDUNG

(11) **EP 2 816 473 A1**
(43) Veröffentlichungstag der Anmeldung: **24.12.2014**
(21) Anmeldenummer: 14002041.3
(22) Anmeldetag: 13.06.2014
(51) Int. Cl.: G06F 9/44

(54) **Verfahren zur Parameterübergabe**

(30) Priorität: 20.06.2013 DE 102013010391
(71) Anmelder: Giesecke & Devrient GmbH, 81677 München (DE)
(72) Erfinder: Butz, Klaus, 81675 München (DE); Hemme, Ludger, 80809 München (DE)

(57) **Zusammenfassung**

Die Erfindung schafft ein Verfahren zur Übergabe eines Parameters von einem zweiten Programm-Modul an ein erstes Programm-Modul, wobei das zweite Programm-Modul ausgeführt wird, so dass der Parameter erzeugt wird und an einer Adresse abgelegt wird, wobei weiter durch das zweite Programm ein Pointer eingerichtet wird, der dazu vorgesehen ist, auf die Adresse zu weisen, an der der Parameter abgelegt wird oder worden ist. Dabei ist die Adresse variabel.

## Beschreibung

Die Erfindung betrifft die Übergabe von Parametern zwischen Programm-Modulen. Insbesondere betrifft die Erfindung ein Verfahren zur Übergabe eines Parameters von einem aufgerufenen Programm-Modul an ein aufrufendes Programm-Modul. Insbesondere betrifft die Erfindung die Übergabe eines Parameters von einer Krypto-Routine an ein Betriebssystem, insbesondere an ein die Krypto-Routine aufrufendes Betriebssystem.

In modularem Programmcode, der aus mehreren gesonderten Programm-Modulen aufgebaut ist, besteht die Notwendigkeit, Parameter, insbesondere Rechenergebnisse, von einem Modul zum nächsten Modul zu übergeben, mit dem Ziel, dass der übergebene Parameter vom nächsten Modul weiterbearbeitet wird.

Bei der Verwendung von Subroutinen oder Unterprogrammen wird durch ein aufrufendes Programm-Modul (übergeordnete Routine, Hauptprogramm) ein aufgerufenes Programm-Modul (Subroutine, Unterprogramm) aufgerufen. Dabei wird durch das aufrufende Programm-Modul die Erzeugung eines Rechenergebnisses an das aufgerufene Programm-Modul delegiert. Das Rechenergebnis wird durch das aufgerufene Programm-Modul erzeugt und als (Rückgabe-) Parameter an das aufrufende Programm-Modul übergeben.

Insbesondere delegieren Betriebssysteme verbreitet kryptographische Berechnungen an Krypto-Routinen, in denen Kryptoalgorithmen implementiert sind. Das Rechenergebnis des Kryptoalgorithmus wird als (Rückgabe-) Parameter an das Betriebssystem übergeben.

In typischen Implementierungen wird ein zu übergebender Parameter vom aufgerufenen Programm-Modul in einem Pointer (Zeiger) auf eine Adresse übergeben. An dieser Adresse wird durch das aufgerufene Programm-Modul das Rechenergebnis abgespeichert. Das aufrufende Programm-Modul liest den Pointer aus, ermittelt daraus die Adresse und liest an der Adresse das Rechenergebnis (als zu übergebenden Parameter) aus.

Zum Ausspähen geheimer Daten (z.B. Schlüssel) aus Krypto-Routinen sind Fehlerangriffe bekannt. Bei diesen wird durch physikalische Einwirkung (z.B. Lichtblitze) versucht, den Programmablauf zu stören und aus dem Rechenergebnis, einmal mit und einmal ohne Störung, Rückschlüsse auf die geheimen Daten zu ziehen.

Eine Abwehrmaßnahme gegen Fehlerangriffe bei Krypto-Routinen besteht darin, im Fall eines erkannten Fehlerangriffs den Pointer, in dem das Rechenergebnis der Krypto-Routine als Parameter ausgegeben wird, mit einer Dummy-Adresse zu belegen. Die Dummy-Adresse weist auf einen unkritischen Speicherbereich. Folglich wird im Fall eines erkannten Fehlerangriffs nicht das Rechenergebnis an das Betriebssystem übergeben, sondern der Inhalt des unkritischen Speicherbereichs.

Bei der Programmcodeerstellung wird häufig die Krypto-Routine von einem Kryptographie-Experten erstellt und zum Einbau in ein Betriebssystem an einen Betriebssystem-Programmierer bereitgestellt.

Herkömmlicherweise weist der Pointer, in dem das Rechenergebnis der Krypto-Routine ausgegeben wird, auf einen immer gleichen Speicherbereich. Daher könnte der Pointer genauso gut durch die direkte Adresse des Rechenergebnisses ersetzt werden. Wird die Krypto-Routine unter Verwendung der direkten Adresse in das Betriebssystem eingebaut, an Stelle unter Verwendung des Pointers, ist der Programmcode effizienter, da der Umweg über den Pointer entfällt. Aus diesem Grund wird beim Einbau einer Krypto-Routine in ein Betriebssystem immer wieder der Pointer für das Rechenergebnis durch die direkte Adresse des Rechenergebnisses ersetzt.

Indem der Pointer durch die direkte Adresse des Rechenergebnisses ersetzt wird, also der Pointer überbrückt wird, wird allerdings die Abwehrmaßnahme gegen Fehlerangriffe unterlaufen. Auch bei einem erkannten Fehlerangriff wird nun das Rechenergebnis an das Betriebssystem übergeben.

Das für Betriebssystem und untergeordnete Krypto-Routine beschriebene Problem könnte bei zwei beliebigen Programm-Modulen, zwischen denen Parameter in Pointern übergeben werden, ebenso auftreten.

Der Erfindung liegt die Aufgabe zu Grunde, das Überbrücken des Pointers, in dem ein Parameter von einem zweiten Programm-Modul an ein erstes Programm-Modul übergeben wird, zu verhindern.

Die Aufgabe wird gelöst durch ein Verfahren zur Übergabe eines Parameters von einem zweiten Programm-Modul an ein erstes Programm-Modul nach Anspruch 1. Bei dem Verfahren wird das zweite Programm-Modul ausgeführt, so dass der Parameter erzeugt wird und an einer Adresse abgelegt wird. Weiter wird durch das zweite Programm ein Pointer eingerichtet, der dazu vorgesehen ist, auf die Adresse zu weisen, an der der Parameter abgelegt wird oder worden ist. (Bei ordnungsgemäßer Programmausführung weist der Pointer auch tatsächlich auf die Adresse des Parameters). Das Verfahren zeichnet sich dadurch aus, dass die Adresse variabel ist.

Gemäß der Erfindung ist die Adresse, an der der Parameter abgelegt wird, variabel. Daher hat bei zwei unterschiedlichen Ausführungen des zweiten

Programm-Moduls die Adresse, an der das zweite Programm-Modul den Parameter ablegt, einen jeweils unterschiedlichen Wert. Wird der Pointer durch diejenige Adresse des Parameters ersetzt, die bei einer einzelnen Ausführung des zweiten Programm-Moduls berechnet worden ist, ist die Adresse für andere Ausführungen des zweiten Programm-Moduls in aller Regel falsch. Die Übergabe des Parameters vom zweiten an das erste Programm-Modul wird somit verhindert. Die richtige Adresse wird nur höchstens durch den Pointer geliefert. Nur höchstens indem die direkte Adresse wieder durch den zuvor entfernten Pointer ersetzt wird, kann der Parameter an das erste Programm-Modul übergeben werden.

Somit ist durch die erfindungsgemäße variable Adresse das Überbrücken des Pointers für den Parameter verhindert.

Wahlweise ist die Adresse zufallsgesteuert variabel, z.B. indem der Adresswert durch eine Zufallszahl beeinflusst ist, die für jede Ausführung des zweiten Programm-Moduls neu zufällig ausgewählt wird.

Wahlweise ist die Adresse dadurch variabel, dass vor jeder Ausführung des zweiten und ersten Programm-Moduls ein Adresswert der Adresse um eine Anzahl von Bits verschoben wird. Wahlweise ist auch die Anzahl Bits zufällig, für jede Ausführung neu zufällig festgelegt.

Wahlweise wird bei dem Verfahren weiter eine Sicherheits-Überprüfung durchgeführt, durch welche die Ausführung des zweiten Programm-Moduls als entweder sicher oder unsicher bewertet wird, und wobei nur, falls die Ausführung des zweiten Programm-Moduls als sicher bewertet wird, der Pointer auf die Adresse des Parameters gesetzt wird. Hierdurch wird erreicht, dass nur, falls das zweite Programm-Modul sicher ausgeführt wurde, der Parameter mittels des Pointers durch das zweite Programm-Modul an das erste Programm-Modul übergeben wird.

Wahlweise wird, falls gemäß der Sicherheits-Überprüfung die ProgrammAusführung des zweiten Programm-Moduls unsicher war, eine Fehlerbehandlungs-Routine gestartet.

Wahlweise wird der Pointer vor der Ausführung des zweiten Programm-Moduls auf eine Dummy-Adresse gesetzt, die von der Adresse des Parameters unterschiedlich ist. Vorzugsweise liegt die Dummy-Adresse in einem unkritischen Speicherbereich, d.h. in einem Speicherbereich, der keine besonders schützenswerten Daten enthält. Hierdurch wird insbesondere erreicht, dass, falls die Sicherheits-Überprüfung übersprungen wird oder das Ergebnis "unsicher" liefert, der Parameter nicht an das erste Programm-Modul übergeben wird. Die Dummy-Adresse kann wahlweise ebenfalls variabel sein, insbesondere zufallsgesteuert variabel.

Alternativ kann vorgesehen sein, dass, falls die Sicherheits-Überprüfung übersprungen wird oder das Ergebnis "unsicher" liefert, der Pointer auf eine Dummy-Adresse gesetzt wird. Bevorzugt ist jedoch, dass der Pointer standardmäßig eine Dummy-Adresse enthält und nur nach Bestehen der vollständigen Sicherheits-Überprüfung die richtige Adresse enthält. Vorzugsweise wird also der Pointer vor Ausführung des zweiten Programm-Moduls auf eine Dummy-Adresse initialisiert.

Wahlweise ist als zweites Programm-Modul ein aufgerufenes Programm-Modul und als erstes Programm-Modul ein aufrufendes Programm-Modul vorgesehen. Im Gesamtablauf wird hierbei zunächst das erste Programm-Modul teilweise ausgeführt, durch das erste Programm-Modul das zweite Programm-Modul aufgerufen, und anschließend das zweite Programm-Modul erfindungsgemäß ausgeführt. Insbesondere werden also der Parameter erzeugt und der Pointer eingerichtet.

Wird der Parameter, ggf. nach Sicherheits-Überprüfungen, tatsächlich vom zweiten an das erste Programm-Modul übergeben, wird schließlich das erste Programm-Modul unter Verwendung des Parameters weiter ausgeführt. Wird der Parameter dagegen nicht übergeben, z.B. wegen Nicht-Bestehens der Sicherheits-Überprüfung, dann wird das erste Programm-Modul nicht ordnungsgemäß weiter ausgeführt. Wahlweise wird dagegen eine Fehlerbehandlungs-Routine gestartet.

Gemäß einer bevorzugten Ausführungsform der Erfindung ist als zweites Programm-Modul eine Krypto-Routine und als erstes Programm-Modul ein Betriebssystem vorgesehen. Insbesondere ist vorzugsweise eine Krypto-Routine vorgesehen, die durch das Betriebssystem aufgerufen wird, ein Rechenergebnis berechnet und das Rechenergebnis als Rückgabe-Parameter in einem Pointer an das Betriebssystem ausgibt. Bei dieser Ausführungsform wird das Betriebssystem ausgeführt. Durch das Betriebssystem wird die Krypto-Routine aufgerufen. Die Krypto-Routine berechnet das Rechenergebnis und legt es als Parameter an einer variablen Adresse ab. Die Krypto-Routine erzeugt weiter an irgendeinem geeigneten Zeitpunkt einen Pointer. Der Pointer soll an das Betriebssystem zurück übergeben werden und nicht durch die direkte Adresse ersetzt werden. Durch die Variabilität der Adresse wird, gemäß der Erfindung, das Beibehalten des Pointers erzwungen.

Wahlweise wird der Pointer vor dem Starten der Krypto-Routine auf eine Dummy-Adresse gesetzt. Wahlweise wird nach der Ausführung der Krypto-Routine eine Sicherheits-Überprüfung durchgeführt. Wahlweise wird der Pointer erst nach der Durchführung der Sicherheits-Überprüfung, und nur falls diese mit dem Ergebnis "Ausführung sicher" durchgeführt wurde, auf die Adresse des Parameters, d.h. des Rechenergebnisses gesetzt. Nur nach Bestehen der Sicherheits-Überprüfung, und nur falls zur Übergabe der Pointer verwendet wird, wird somit das Rechenergebnis der Krypto-Routine als Rückgabe-Parameter an das Betriebssystem übergeben.

Im Folgenden wird die Erfindung an Hand von Ausführungsbeispielen und unter Bezugnahme auf die Zeichnung näher erläutert, in der zeigen:
- Fig. 1: eine Pseudo-Programmcode-Sequenz mit Übergabe eines Parameters unter Überbrückung des zur Übergabe vorgesehenen Pointers;
- Fig. 2: eine Pseudo-Programmcode-Sequenz mit Übergabe eines Parameters unter Nutzung des zur Übergabe vorgesehenen Pointers;
- Fig. 3: eine Speicherbelegung nach ordnungsgemäßer Ausführung einer Krypto-Routine;
- Fig. 4: eine Speicherbelegung nach Ausführung einer Krypto-Routine, und mit einem erkannten Fehlerangriff, oder alternativ vor Ausführung der Krypto-Routine;
- Fig. 5: eine Variation der Adresse eines Rückgabe-Parameters.

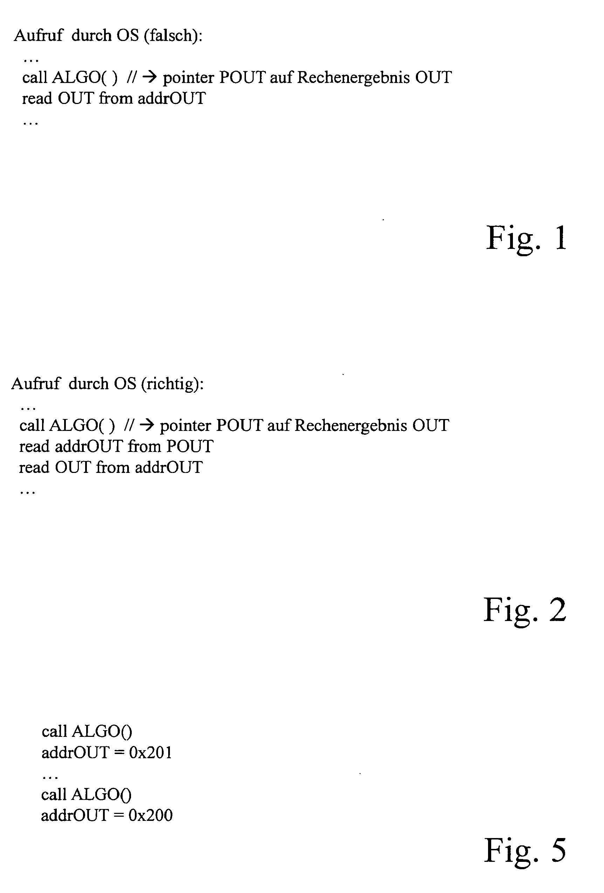

Fig. 1 zeigt eine Pseudo-Programmcode-Sequenz mit Übergabe, als Rückgabe-Parameter, eines Rechenergebnisses OUT von einer Krypto-Routine ALGO an ein Betriebssystem OS, unter Überbrückung des zur Übergabe vorgesehenen Pointers POUT. Mit call ALGO() wird durch das Betriebssystem OS die Krypto-Routine ALGO aufgerufen. Die Krypto-Routine ALGO legt einen Pointer POUT für das Rechenergebnis OUT an. Die Krypto-Routine ALGO erzeugt das Rechenergebnis und legt es als Rückgabe-Parameter OUT an der Adresse addrOUT ab. Die Krypto-Routine ALGO wird in das Betriebssystem OS eingebaut. Dabei wird zur Übergabe des Parameters / Rechenergebnisses OUT von der Krypto-Routine ALGO an das Betriebssystem OS die Pseudocodefolge "read OUT from addrOUT" verwendet. Hierdurch wird das Rechenergebnis OUT direkt von der Speicheradresse addrOUT ausgelesen. Ein solcher falscher Einbau der Krypto-Routine ALGO in das Betriebssystem OS wird mit der Erfindung verhindert.

Fig. 2 zeigt eine Pseudo-Programmcode-Sequenz mit Übergabe, als Rückgabe-Parameter, eines Rechenergebnisses OUT von einer Krypto-Routine ALGO an ein Betriebssystem OS, unter Nutzung des zur Übergabe vorgesehenen Pointers POUT. Im Unterschied zur Konstellation aus Fig. 1 wird zur Übergabe des Parameters / Rechenergebnisses OUT von der Krypto-Routine ALGO an das Betriebssystem OS die Pseudocodefolge "read addrOUT from POUT, read OUT from addrOUT" verwendet. Hierdurch wird zuerst die Adresse addrOUT des Rechenergebnisses aus dem Pointer POUT ausgelesen. Danach wird aus der Adresse addrOUT des Rechenergebnisses das Rechenergebnis OUT ausgelesen. Die in Fig. 2 dargestellte Form des Einbaus der Krypto-Routine in das Betriebssystem OS ist wünschenswert und richtig.

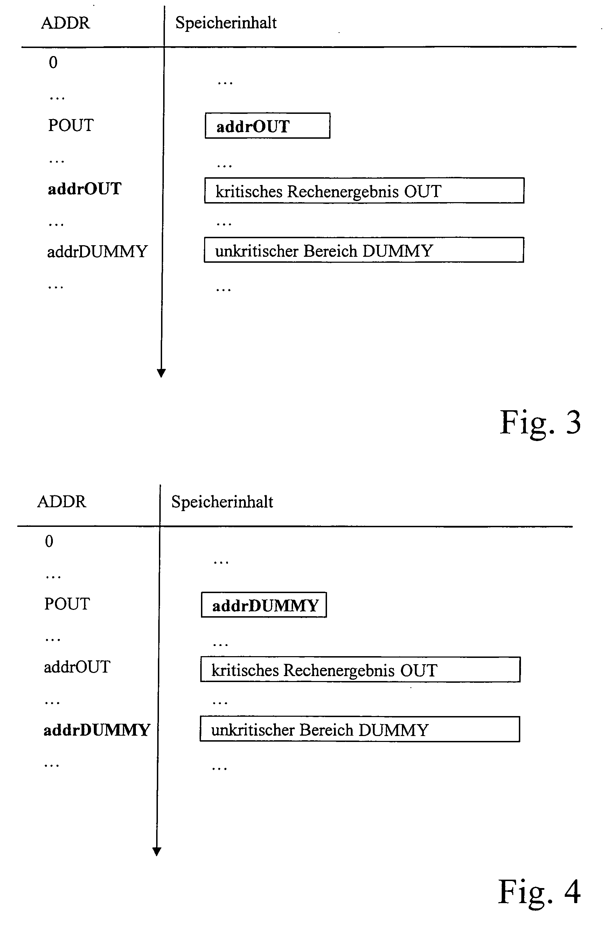

Fig. 3 zeigt eine Speicherbelegung nach ordnungsgemäßer Ausführung einer Krypto-Routine. Der Speicher beginnt an einer Adresse ADDR 0 (Null). An einer Adresse POUT ist als Speicherinhalt eine weitere Adresse addrOUT vorgesehen. An der Adresse addrOUT ist das Rechenergebnis OUT der Krypto-Routine abgelegt. An einer Dummy-Adresse addrDUMMY sind unkritische Daten DUMMY abgelegt. In der Regel gibt es eine Mehrzahl von Dummy-Adressen, d.h. es gibt einen mehr oder weniger ausgedehnten unkritischen Speicherbereich DUMMY. Ein Auslesen des Pointers POUT liefert somit das Rechenergebnis OUT der Krypto-Routine.

Fig. 4 zeigt eine Speicherbelegung nach Ausführung einer Krypto-Routine, und mit einem erkannten Fehlerangriff. Im Unterschied zur Speicherbelegung aus Fig. 3 ist an der Adresse POUT des Pointers eine Dummy-Adresse addrDUMMY an einer unkritischen Adresse bzw. im unkritischen Speicherbereich abgelegt. Ein Auslesen des Pointers POUT liefert somit nur unbrauchbare Daten. Die Darstellung in Fig. 4 entspricht ebenfalls der Speicherbelegung vor Ausführung der Krypto-Routine, nachdem der Pointer auf die Dummy-Adresse addrDUMMY initialisiert worden ist.

Die in Fig. 3,4 gezeigten Speicheradressen sind in der Regel Adressen im flüchtigen Arbeitsspeicher RAM.

Fig. 5 zeigt eine Variation der Adresse addrOUT eines Rückgabe-Parameters OUT einer Krypto-Routine ALGO. Bei einem ersten Aufruf der Krypto-Routine ALGO wird das durch die Krypto-Routine ALGO erzeugte Rechenergebnis an einer Adresse 0x201 abgelegt. Bei einem nachfolgenden, zweiten Aufruf der Krypto-Routine ALGO wird das durch die Krypto-Routine ALGO erzeugte Rechenergebnis an einer unterschiedlichen Adresse 0x200 abgelegt.

## Patentansprüche

1. Verfahren zur Übergabe eines Parameters von einem zweiten Programm-Modul an ein erstes Programm-Modul, wobei das zweite Programm-Modul ausgeführt wird, so dass der Parameter erzeugt wird und an einer Adresse abgelegt wird, wobei weiter durch das zweite Programm ein Pointer eingerichtet wird, der dazu vorgesehen ist, auf die Adresse zu weisen, an der der Parameter abgelegt wird oder worden ist,
**dadurch gekennzeichnet, dass**
die Adresse variabel ist.

2. Verfahren nach Anspruch 1, wobei die Adresse zufallsgesteuert variabel ist.

3. Verfahren nach Anspruch 1 oder 2, wobei die Adresse dadurch variabel ist, dass vor jeder Ausführung des zweiten und ersten Programm-Moduls ein Adresswert der Adresse um eine Anzahl von Bits verschoben wird.

4. Verfahren nach einem der Ansprüche 1 bis 3, wobei weiter eine Sicherheits-Überprüfung durchgeführt wird, durch welche die Ausführung des zweiten Programm-Moduls als entweder sicher oder unsicher bewertet wird, und wobei nur, falls die Ausführung des zweiten Programm-Moduls als sicher bewertet wird, der Pointer auf die Adresse des Parameters gesetzt wird.

5. Verfahren nach einem der Ansprüche 1 bis 4, wobei der Pointer vor der Ausführung des zweiten Programm-Moduls auf eine Dummy-Adresse gesetzt wird, die von der Adresse des Parameters unterschiedlich ist.

6. Verfahren nach einem der Ansprüche 1 bis 5, wobei als zweites Programm-Modul ein aufgerufenes Programm-Modul und als erstes Programm-Modul ein aufrufendes Programm-Modul vorgesehen ist.

7. Verfahren nach einem der Ansprüche 1 bis 6, wobei als zweites Programm-Modul eine Krypto-Routine (ALGO) und als erstes Programm-Modul ein Betriebssystem (OS) vorgesehen ist.

8. Verfahren nach Anspruch 7, wobei als Parameter das Rechenergebnis (OUT) der Krypto-Routine (ALGO) vorgesehen ist.
